# EUROPEAN PATENT APPLICATION

(11) **EP 4 446 602 A1**
(43) Date of publication of application: **16.10.2024**
(21) Application number: 21967122.9
(22) Date of filing: 07.12.2021
(51) Int. Cl.: F16C 19/52, F16C 33/66, F16C 33/78, F16C 41/00

(54) **ROLLER BEARING**

(71) Applicant: JTEKT Corporation, Kariya-shi, Aichi 448-8652 (JP)
(72) Inventor: ISHII, Yasuhiko, Kariya-shi, Aichi 448-8652 (JP); DODORO, Hirofumi, Kariya-shi, Aichi 448-8652 (JP); ISEDA, Kenichi, Kariya-shi, Aichi 448-8652 (JP)
(74) Representative: Winter, Brandl - Partnerschaft mbB
(86) International application number: PCT/JP2021/044896
(87) International publication number: WO 2023/105618

(57) **Abstract**

A rolling bearing includes: an outer ring; an inner ring; a plurality of rolling elements arranged between the outer ring and the inner ring; and an electrically conductive annular member attached to an axial end of the outer ring, the annular member separating a bearing internal space where the rolling elements are located from a bearing external space that is outside the bearing internal space in an axial direction. The annular member includes an electrically conductive elastic lip portion that contacts the inner ring. An oil channel connecting the bearing internal space and the bearing external space is provided in the annular member.

## Description

### TECHNICAL FIELD

The present disclosure relates to rolling bearings.

### BACKGROUND ART

Patent Document 1 discloses a rolling bearing having an anti-electrolytic corrosion function as a bearing that supports a rotating shaft of a motor. This rolling bearing includes an outer ring, an inner ring, a plurality of balls arranged between the outer ring and the inner ring, and sealing plates that close the space between the outer ring and the inner ring from both sides in an axial direction. Each sealing plate includes a holder fixed to the outer ring and a sliding member held by the holder and is in sliding contact with the outer peripheral surface of the inner ring. The sliding member is made of a woven fabric containing electrically conductive fibers.

### Related Art Documents

### Patent Documents

Patent Document 1: Japanese Unexamined Patent Application Publication No. 2010-106971 (JP 2010-106971 A)

### SUMMARY OF THE INVENTION

### Problem to be Solved by the Invention

For example, if an inner ring of a rolling bearing is charged by electricity generated by a motor and an oil film between balls and a raceway is broken, a current may flow to an outer ring through the balls. This may cause electrolytic corrosion on raceway surfaces. The rolling bearing disclosed in Patent Document 1 allows electricity built on the inner ring to flow to the outer ring through the sealing plates. This can prevent electrolytic corrosion on the raceway surfaces.

However, even in the above rolling bearing, there are cases where oil is supplied to the internal space of the bearing where the balls are located for lubrication and cases where oil around the rolling bearing is circulated through the rolling bearing. In such cases, the rolling bearing disclosed in Patent Document 1 cannot be used because the sealing plates close the internal space of the bearing from both sides in the axial direction.

### Means for Solving the Problem

A rolling bearing of the present disclosure includes: an outer ring; an inner ring; a plurality of rolling elements arranged between the outer ring and the inner ring; and an electrically conductive annular member attached to an axial end of the outer ring, the annular member separating a bearing internal space where the rolling elements are located from a bearing external space that is outside the bearing internal space in an axial direction. The annular member includes an electrically conductive elastic lip portion that contacts the inner ring. An oil channel connecting the bearing internal space and the bearing external space is provided in the annular member.

### Effects of the Invention

The rolling bearing of the present disclosure can prevent electrolytic corrosion on raceway surfaces on which the rolling elements roll. Moreover, it is possible to obtain a rolling bearing that can be used even when oil is used.

### BRIEF DESCRIPTION OF THE DRAWINGS

[FIG. 1] FIG. 1 is a sectional view showing an example of a rolling bearing of the present disclosure.
[FIG. 2] FIG. 2 is a sectional view showing an annular member and its surrounding area.
[FIG. 3] FIG. 3 is a diagram of the rolling bearing shown in FIGS. 1 and 2 as viewed in an axial direction.
[FIG. 4] FIG. 4 is a sectional view of the rolling bearing, illustrating a modification of the annular member.
[FIG. 5] FIG. 5 is an illustration of the annular member of the rolling bearing shown in FIG. 4 as viewed in the axial direction.
[FIG. 6] FIG. 6 is an enlarged sectional view showing a cut forming an oil channel and its surrounding area.

### MODES FOR CARRYING OUT THE INVENTION

### <Overview of Embodiment of Invention of Present Disclosure>

An overview of an embodiment of the invention of the present disclosure will be provided below.
(1) A rolling bearing of the present disclosure includes: an outer ring; an inner ring; a plurality of rolling elements arranged between the outer ring and the inner ring; and an electrically conductive annular member attached to an axial end of the outer ring, the annular member separating a bearing internal space where the rolling elements are located from a bearing external space that is outside the bearing internal space in an axial direction. The annular member includes an electrically conductive elastic lip portion that contacts the inner ring. An oil channel connecting the bearing internal space and the bearing external space is provided in the annular member.
   The above rolling bearing allows electricity built on one bearing ring out of the outer ring and the inner ring to flow to the other bearing ring through the electrically conductive annular member. This can prevent electrolytic corrosion on raceway surfaces on which the rolling elements roll. Moreover, when the rolling bearing is used in a device having such a configuration that oil circulates in the device through the rolling bearing, the oil channel can provide a flow path for the oil. When oil around the rolling bearing is used to lubricate the rolling bearing, the oil can pass through the oil channel. Therefore, the oil will not stagnate in the bearing internal space, which can reduce an increase in stirring resistance. It is thus possible to obtain a rolling bearing that can be used even when oil is used.
(2) Preferably, the oil channel is a hole extending through the annular member. In this case, even though the oil channel is formed by the hole, the rigidity of the annular member can be easily ensured.
(3) Preferably, the oil channel is a cut provided in an inner peripheral edge region of the annular member that includes the elastic lip portion. In this case, the oil channel is formed by the cut, and the contact range between the elastic lip portion and the inner ring is reduced, so that sliding resistance can be reduced.
(4) In the rolling bearing of (2), the hole is preferably provided radially outward of a pitch circle of the plurality of rolling elements. When the rolling bearing rotates, oil tends to be forced radially outward due to the centrifugal force. Since the hole is provided closer to the radially outer side of the annular member, the oil is more likely to pass through the hole.
(5) In the rolling bearing of (3), preferably, a circumferential groove is provided in an axial end of the inner ring, the elastic lip portion is placed in the circumferential groove, and the cut is provided in a part of the elastic lip portion that is located in a range of the circumferential groove. In this case, it is possible to obtain a rolling bearing that allows the amount of oil passing through the cut to be easily controlled.
(6) Preferably, the annular member is provided only on one side in the axial direction, and an annular space between the outer ring and the inner ring is open on the other side in the axial direction. In this case, it is possible to supply oil to the bearing internal space of the annular space where the rolling elements are located, and the amount of supplied oil therein will not become too much. A function to prevent an increase in stirring resistance of the rolling bearing is therefore improved.

### <Details of Embodiment of Invention of Present Disclosure>

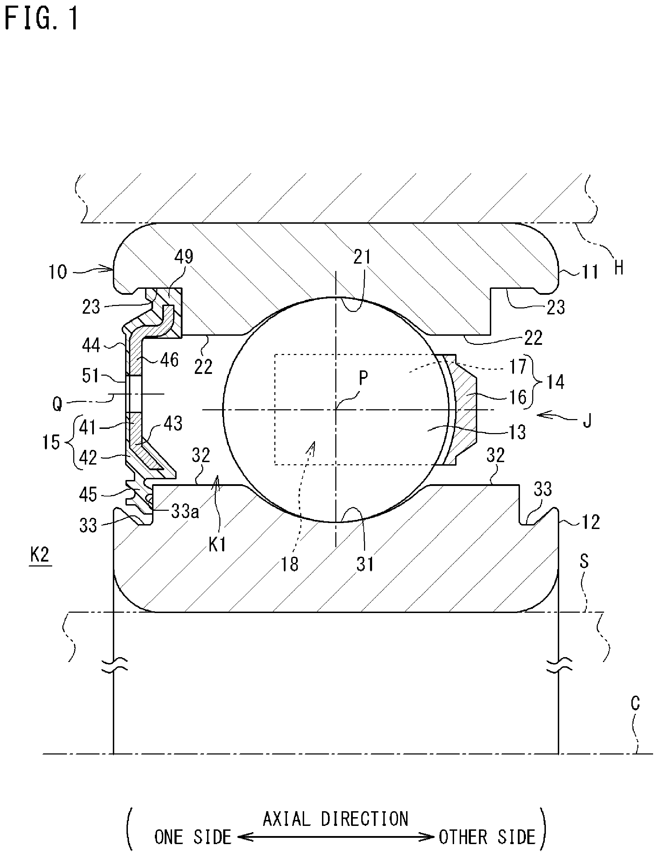

Hereinafter, the embodiment of the invention of the present disclosure will be described. FIG. 1 is a sectional view showing an example of a rolling bearing of the present disclosure. A rolling bearing 10 shown in FIG. 1 supports a rotating shaft S of a motor mounted on a battery electric vehicle or a hybrid electric vehicle. In FIG. 1, the rotating shaft S is shown in hidden outline (long dashed double-short dashed line).

The rolling bearing 10 includes one outer ring 11, one inner ring 12, a plurality of rolling elements, and one annular member 15. In the present embodiment, the rolling elements are balls 13, and the rolling bearing 10 is a deep groove ball bearing. The outer ring 11 is attached to a housing H of the motor, and the inner ring 12 is fitted and fixed on the rotating shaft S. In FIG. 1, the housing H is shown in hidden outline (long dashed double-short dashed line). In the present embodiment, the outer ring 11 is a stationary ring, and the inner ring 12 is a rotating ring.

The direction of the rolling bearing 10 of the present disclosure will be described. The outer ring 11 and the inner ring 12 are arranged concentrically, and their centerline coincides with a centerline C of the rolling bearing 10. A direction along the centerline C and a direction parallel to the centerline C are defined as the "axial direction." A direction perpendicular to the centerline C is defined as the "radial direction." A direction along a circle about the centerline C is defined as the "circumferential direction."

When the left side in FIG. 1 is defined as one side in the axial direction (first side in the axial direction) and the right side in FIG. 1 is defined as the other side in the direction (second side in the axial direction), the annular member 15 is provided only on the one side in the axial direction of the rolling bearing 10. The annular member 15 is not provided on the other side in the axial direction of the rolling bearing 10. A bearing internal space K1 where the balls 13 are present in an annular space J between the outer ring 11 and the inner ring 12 is open on the other side in the axial direction.
In the present embodiment, oil passes through the annular space J of the rolling bearing 10. The direction in which oil flows may be a direction from the one side in the axial direction toward the other side in the axial direction, or may be the opposite direction.

An outer ring raceway 21 on which the balls 13 roll is formed in an inner peripheral surface of the outer ring 11. Shoulders 22 are formed on both sides in the axial direction of the outer ring raceway 21. A recess 23 is provided on the one side in the axial direction of the outer ring 11. The recess 23 is in the shape of a groove that is continuous in the circumferential direction, and the annular member 15 is placed in the recess 23. Although a recess 23 is also formed on the other side in the axial direction of the outer ring 11, this recess 23 may be omitted.

An inner ring raceway 31 on which the balls 13 roll is formed in an outer peripheral surface of the inner ring 12. Shoulders 32 are formed on both sides in the axial direction of the inner ring raceway 31. A circumferential groove 33 is formed in an end on the one side in the axial direction of the inner ring 12. An elastic lip portion 45 that is part of the annular member 15 contacts the circumferential groove 33. Although a circumferential groove 33 is also formed on the other side in the axial direction of the inner ring 12, this circumferential groove 33 may be omitted.

The balls 13 are arranged between the outer ring 11 and the inner ring 12, and are in rolling contact with the outer ring raceway 21 and the inner ring raceway 31. The plurality of balls 13 is held spaced apart from each other in the circumferential direction by an annular cage 14.

The cage 14 includes an annular body 16 provided on the other side in the axial direction of the balls 13, and a plurality of prongs (pillars) 17 provided so as to extend from the annular body 16 toward the one side in the axial direction. Spaces located on the one side in the axial direction of the annular body 16 and each located between circumferentially adjacent two of the prongs 17, 17 are pockets 18 that hold the balls 13. The pockets 18 are open on the one side in the axial direction.

A current generated by the motor, not shown, may flow through the rolling bearing 10. The annular member 15 is a member that forms a path for the current flowing through the rolling bearing 10. In other words, the annular member 15 is part of the path for the current flowing through the rolling bearing 10. Therefore, the entire annular member 15 is electrically conductive. The current generated by the motor flows in the rolling bearing 10 through the annular member 15 rather than flowing in the rolling bearing 10 through the balls 13.

An oil film is formed between the balls 13 and each of the inner ring raceway 31 and the outer ring raceway 21. The oil film functions as an insulating film, but if the oil film is partially broken, electricity may flow between the balls 13 and the inner ring raceway 31 (outer ring raceway 21). However, the annular member 15 prevents the inner ring 12 (or outer ring 11) from being electrically charged. Electricity can thus be prevented in advance from flowing between the balls 13 and the inner ring raceway 31 (outer ring raceway 21) even if the oil film is partially broken. As a result, it is possible to prevent electrolytic corrosion on the outer ring raceway 21 and the inner ring raceway 31 due to a current flowing in the rolling bearing 10 through the balls 13.

### [About Annular Member 15]

The annular member 15 is attached to an axial end of the outer ring 11. The annular member 15 is fixed to the outer ring 11 with a radially outer end 49 of the annular member 15 fitted in the recess 23 of the outer ring 11. The annular member 15 has an annular shape. The annular member 15 separates the bearing internal space K1 where the balls 13 are located from a bearing external space K2 that is outside the bearing internal space K1 in the axial direction. The annular member 15 closes the bearing internal space K1 from the one side in the axial direction except for part of the bearing internal space K1 (oil channels that will be described later). The annular member 15 can thus function as a sealing member that reduces entry of foreign matter such as wear debris generated in the bearing external space K2 on the one side in the axial direction.

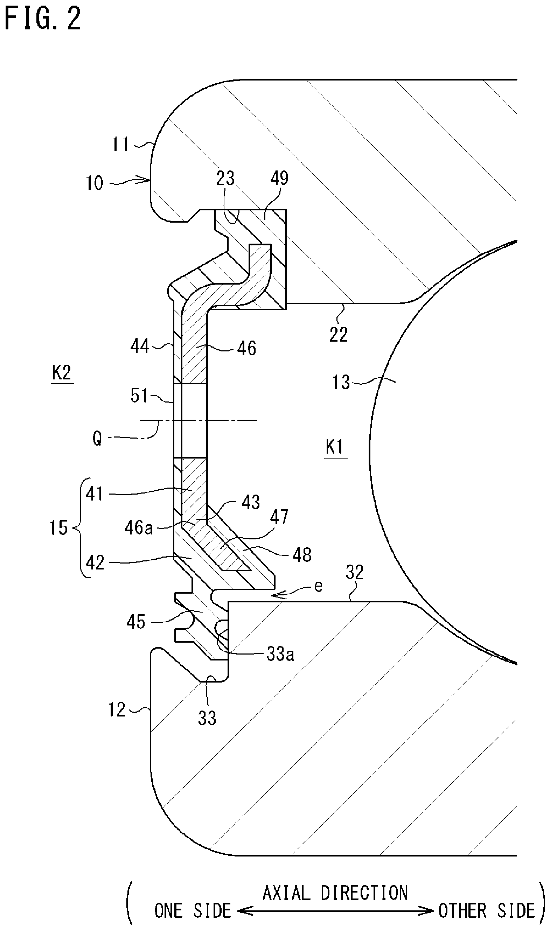

FIG. 2 is a sectional view showing the annular member 15 and its surrounding area. The annular member 15 includes a core (metal ring) 41 made of metal and an elastic member 42 made of electrically conductive rubber. The core 41 has an annular shape and has a bent portion 43 on its radially inner side. The elastic member 42 covers the core 41. The elastic member 42 is made of synthetic rubber. The synthetic rubber has been mixed with electrically conductive carbon black or metal powder. The elastic member 42 is thus made electrically conductive. The core 41 is made of, for example, stainless steel.

The elastic member 42 includes a body portion 44 that covers the core 41, and the elastic lip portion 45 provided so as to extend radially inward from the body portion 44. The elastic lip portion 45 is part of the elastic member 42 and is therefore electrically conductive. The elastic lip portion 45 contacts the inner ring 12. In the form shown in FIG. 2, the elastic lip portion 45 contacts a wall surface 33a of the circumferential groove 33 in the inner ring 12 that faces in the axial direction.

The core 41 includes an annular plate portion 46 and a tilted portion 47 extending from a radially inner end 46a of the plate portion 46. The tilted portion 47 extends from the end 46a such that the radially inner side of the tilted portion 47 is located further into the bearing internal space K1. The elastic member 42 includes a covering portion 48 that covers the tilted portion 47. The covering portion 48 may have a lip portion that contacts the shoulder 32 of the inner ring 12, but in the form shown in FIG. 2, a clearance e is formed between the covering portion 48 and the shoulder 32 of the inner ring 12. The elastic lip portion 45 is provided so as to extend radially inward from the covering portion 48.

An adhesive is provided as a coating film on the surface of the core 41, and the elastic member 42 covers the core 41 via the adhesive. The electrical resistance value of the core 41 including the coating film (adhesive) is lower than the electrical resistance value of the elastic member 42. Therefore, the core 41 is also actively utilized as an electrically conductive member. The volume resistivity of the elastic member 42 is preferably 100 Ω·cm or less, more preferably 20 Ω·cm or less.

### [Oil Channels (First Example)]

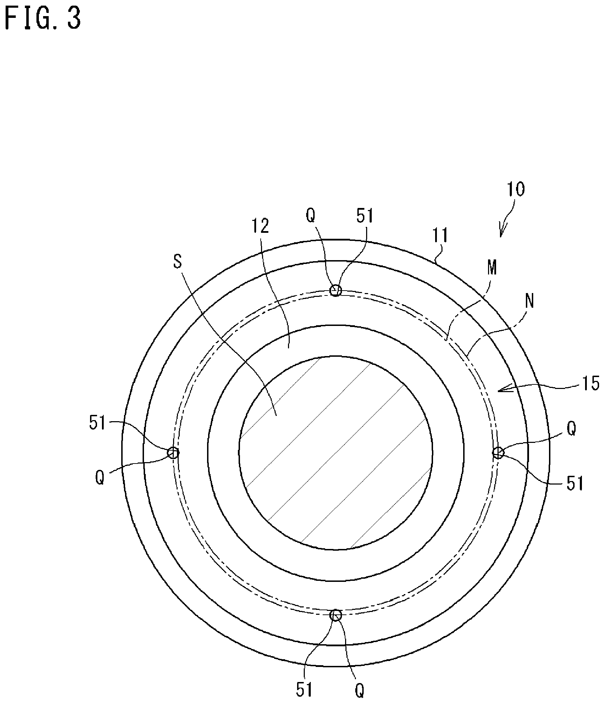

FIG. 3 is a diagram of the rolling bearing 10 shown in FIGS. 1 and 2 as viewed in the axial direction. A plurality of holes 51 connecting the bearing internal space K1 and the bearing external space K2 is formed as oil channels in the annular member 15. Oil can pass through the holes 51. The holes 51 extend through the core 41 and the elastic member 42 in the axial direction. The plurality of holes 51 is provided at intervals in the circumferential direction. In the form shown in FIG. 3, the plurality of (four) holes 51 is provided at equal intervals in the circumferential direction. The holes 51 are circular holes.

An imaginary circle passing through the centers P (see FIG. 1) of the plurality of balls 13 is herein defined as a pitch circle M (see FIG. 3). The centers Q of the holes 51 are located outside the pitch circle M in the radial direction. In the present embodiment, the four holes 51 are located along one imaginary circle N about the centerline C of the rolling bearing 10. The imaginary circle N has a larger radius than the pitch circle M. The holes 51 may be arranged in a manner different from that shown in the figure.

### [Oil Channels (Second Example)]

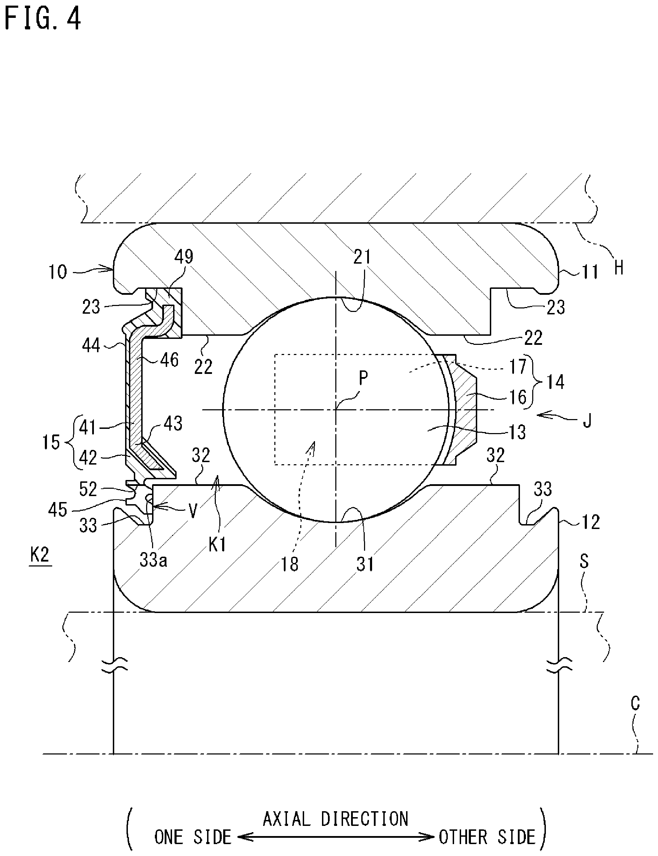

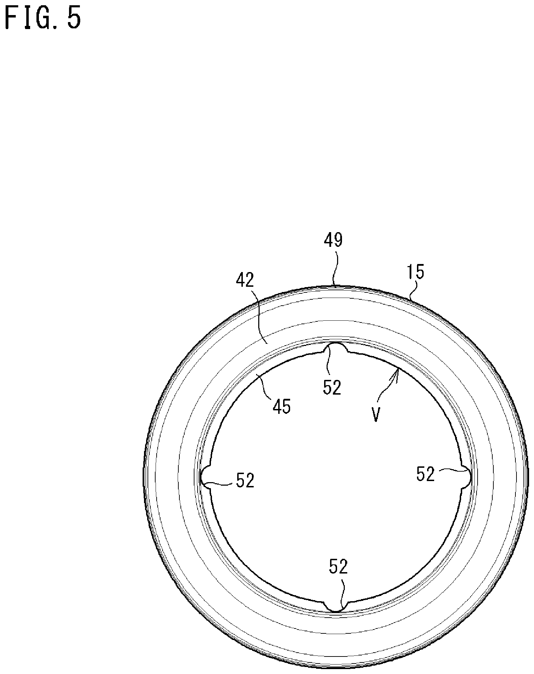

A modification of the oil flow channels in the annular member 15 will be described. FIG. 4 is a sectional view of the rolling bearing 10, illustrating a modification of the annular member 15. FIG. 5 is an illustration of the annular member 15 of the rolling bearing 10 shown in FIG. 4 as viewed in the axial direction. In the form shown in FIGS. 4 and 5, the oil channels are cuts 52 formed in the annular member 15. The cuts 52 are provided in an inner peripheral edge region V of the annular member 15 that includes the elastic lip portion 45. The elastic lip portion 45 is provided along the circumferential direction, and the cuts 52 are provided in part of the elastic lip portion 45.

The cuts 52 have such a shape that they extend through the elastic lip portion 45 in the axial direction. The plurality of cuts 52 is provided at intervals in the circumferential direction. In the form shown in FIG. 5, four cuts 52 are provided at equal intervals in the circumferential direction.

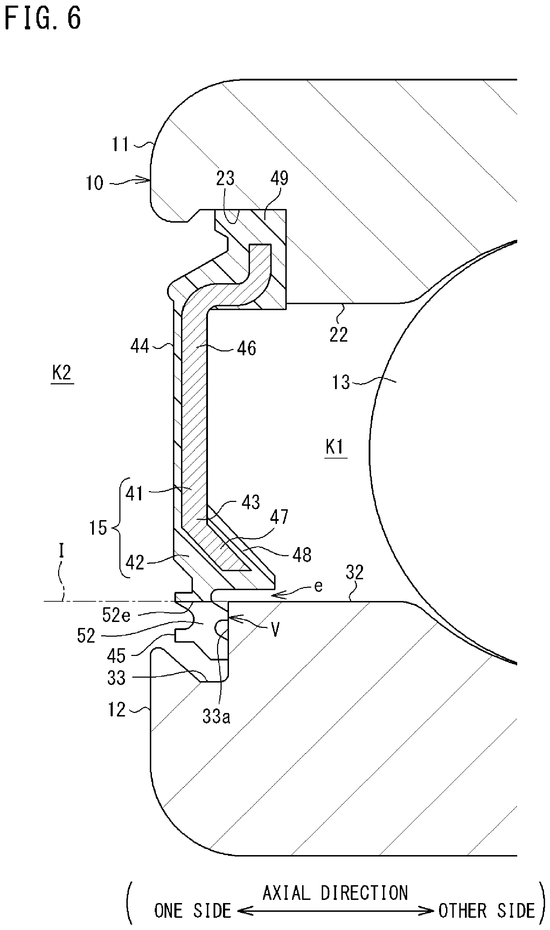

FIG. 6 is an enlarged sectional view showing the cut 52 forming the oil channel and its surrounding area. The radial formation range of the cut 52 in the elastic lip portion 45 is the range of the circumferential groove 33 provided in the inner ring 12. In other words, a radially outer end 52e of the cut 52 coincides with an imaginary cylindrical plane I passing through the shoulder 32 of the inner ring 12, or is located radially inward of the imaginary cylindrical plane I. The radial formation range of the cut 52 may be different from the range described above. Although not shown in the figure, the radially outer end 52e of the cut 52 may be located radially outward of the imaginary cylindrical plane I. In this case, the cut 52 may be formed in part (inner peripheral end) of the core 41 in addition to the elastic lip portion 45.

### [About Rolling Bearing 10 of Each Form]

As described above, the rolling bearing 10 of each of the above forms (see FIGS. 1 and 4) includes the annular member 15 attached to the axial end of the outer ring 11. The entire annular member 15 is electrically conductive. The annular member 15 separates the bearing internal space K1 from the bearing external space K2. The annular member 15 includes the electrically conductive elastic lip portion 45 that contacts the inner ring 12. The oil channels connecting the bearing internal space K1 and the bearing external space K2 are provided in the annular member 15. In the form shown in FIG. 1, the oil channels are the holes 51. In the form shown in FIG. 4, the oil channels are the cuts 52.

The rolling bearing 10 allows electricity built on the inner ring 12 to flow to the outer ring 11 through the electrically conductive annular member 15. This can prevent electrolytic corrosion on the raceway surfaces on which the balls 13 roll (outer ring raceway 21, inner ring raceway 31).
Moreover, when oil circulates in a device through the rolling bearing 10, the oil channels can provide a flow path for the oil.
When oil around the rolling bearing 10 is used to lubricate the rolling bearing 10, the oil can pass through the oil channels. Therefore, the oil will not stagnate in the bearing internal space K1, which can reduce an increase in stirring resistance during rotation of the bearing. It is thus possible to obtain the rolling bearing 10 that can be used even when oil is used.

In the rolling bearings 10 shown in FIGS. 1 and 4, the annular member 15 is provided only on the one side in the axial direction, and the annular space J between the outer ring 11 and the inner ring 12 is open on the other side in the axial direction. Therefore, oil can be supplied from the other side in the axial direction to the bearing internal space K1 where the balls 13 are provided. By making the oil channels (holes 51, cuts 52) function as oil discharge channels, the amount of supplied oil in the bearing internal space K1 will not become too much, which prevents an increase in stirring resistance of the rolling bearing 10.

For example, when oil circulates inside a device such as the motor through the rolling bearings 10 shown in FIGS. 1 and 4 and the flow direction of the oil is from the one side in the axial direction toward the other side in the axial direction, the oil enters the bearing internal space K1 through the oil channels (holes 51, cuts 52). Accordingly, the amount of oil, particularly in the bearing internal space K1, will not become too much, which can reduce an increase in stirring resistance during rotation of the bearing.

In the form shown in FIG. 1, the oil channels are the holes 51 extending through the annular member 15. In this case, even though the oil channels are formed by the holes 51 that are absent portions, the rigidity of the annular member 15 can be easily ensured. When the rolling bearing 10 rotates, oil tends to be forced radially outward due to the centrifugal force. Therefore, as shown in FIG. 3, the holes 51 (centers Q of the holes 51) are provided radially outward of the pitch circle M of the plurality of balls 13. Since the holes 51 are provided closer to the radially outer side of the annular member 15, the oil is more likely to pass through the holes 51.

In the form shown in FIG. 4, the oil channels are the cuts 52 provided in the inner peripheral edge region V of the annular member 15 that includes the elastic lip portion 45. In this case, the oil channels are formed by the cuts 52, and the contact range between the elastic lip portion 45 and the inner ring 12 is reduced, so that sliding resistance can be reduced.

The circumferential groove 33 is formed in the axial end of the inner ring 12, and the elastic lip portion 45 is placed in the circumferential groove 33. As shown in FIG. 6, each cut 52 is provided in a part of the elastic lip portion 45 that is located in the range of the circumferential groove 33. In this case, it is possible to obtain the rolling bearing 10 that allows the amount of oil passing through the cuts 52 to be easily controlled. In particular, as shown in FIG. 6, the annular member 15 has, in its inner periphery, the covering portion 48 that faces the shoulder 32 of the inner ring 12 with the clearance e therebetween. The amount of oil passing through is limited by the clearance e and the cuts 52.

### [Others]

The above embodiment illustrates the case where the outer ring 11 is a stationary ring and the inner ring 12 is a rotating ring. However, the outer ring 11 may be a rotating ring and the inner ring 12 may be a stationary ring. In this case as well, the annular member 15 is attached to the axial end of the outer ring 11, and the configuration of the annular member 15 is the same as that in the form shown in FIG. 1 or 4.

The annular member 15 may be provided at both axial ends of the rolling bearing 10.

The above embodiment illustrates the case where the rolling bearing 10 is a deep groove ball bearing. However, the rolling bearing 10 may be an angular contact ball bearing, a roller bearing whose rolling elements are rollers, etc.

The above embodiment is illustrative in all respects and not restrictive. The scope of the present invention is shown by the claims rather than the above embodiment, and is intended to include all modifications within the scope equivalent to that of the configurations described in the claims.

### Description of the Reference Numerals

10 ... rolling bearing, 11 ... outer ring, 12 ... inner ring, 13 ... ball (rolling element), 15 ... annular member, 33 ... circumferential groove, 45 ... elastic lip portion, 51 ... hole (oil channel), 52 ... cut (oil channel), K1 ... bearing internal space, K2 ... bearing external space, M ... pitch circle, V ... inner peripheral edge region

## Claims

1. A rolling bearing, comprising: an outer ring; an inner ring; a plurality of rolling elements arranged between the outer ring and the inner ring; and an electrically conductive annular member attached to an axial end of the outer ring, the annular member separating a bearing internal space where the rolling elements are located from a bearing external space that is outside the bearing internal space in an axial direction, wherein
the annular member includes an electrically conductive elastic lip portion that contacts the inner ring, and
an oil channel connecting the bearing internal space and the bearing external space is provided in the annular member.

2. The rolling bearing according to claim 1, wherein the oil channel is a hole extending through the annular member.

3. The rolling bearing according to claim 1, wherein the oil channel is a cut provided in an inner peripheral edge region of the annular member that includes the elastic lip portion.

4. The rolling bearing according to claim 2, wherein the hole is provided radially outward of a pitch circle of the plurality of rolling elements.

5. The rolling bearing according to claim 3, wherein
a circumferential groove is provided in an axial end of the inner ring,
the elastic lip portion is placed in the circumferential groove, and
the cut is provided in a part of the elastic lip portion that is located in a range of the circumferential groove.

6. The rolling bearing according to any one of claims 1 to 5, wherein the annular member is provided only on one side in the axial direction, and an annular space between the outer ring and the inner ring is open on the other side in the axial direction.

## Amended claims

### Amended claims under Art. 19.1 PCT

1. (Amended) A rolling bearing, comprising: an outer ring; an inner ring; a plurality of rolling elements arranged between the outer ring and the inner ring; and an electrically conductive annular member attached to an axial end of the outer ring, the annular member separating a bearing internal space where the rolling elements are located from a bearing external space that is outside the bearing internal space in an axial direction, wherein
the annular member includes an electrically conductive elastic lip portion that contacts the inner ring,
an oil channel connecting the bearing internal space and the bearing external space is provided in the annular member,
the oil channel is a cut provided in an inner peripheral edge region of the annular member that includes the elastic lip portion,
a circumferential groove is provided in an axial end of the inner ring,
the elastic lip portion is placed in the circumferential groove, and
the cut is provided in a part of the elastic lip portion that is located in a range of the circumferential groove.

2. (Deleted)

3. (Deleted)

4. (Deleted)

5. (Deleted)

6. (Amended) The rolling bearing according to claim 1, wherein the annular member is provided only on one side in the axial direction, and an annular space between the outer ring and the inner ring is open on the other side in the axial direction.

Statement under Art. 19.1 PCT
Claims 1 and 6 have been amended. Claims 2, 3, 4, and 5 have been deleted. Claim 1 has been amended in lines 9 to 15. The basis for the amendments can be found in claims 3 and 5 as filed.

Claim 6 has been amended to depend only on claim 1 in accordance with the amendment of claim 1.
